# EUROPEAN PATENT SPECIFICATION

(11) **EP 0 430 369 B1**
(45) Date of publication and mention of the grant of the patent: **01.06.1994**
(21) Application number: 90203111.1
(22) Date of filing: 23.11.1990
(51) Int. Cl.: C03B 5/00, C03B 5/04

(54) **A method for processing ash residues as well as glazekilns useful therein**
Verfahren und Ofen zum Schmelzen von Aschenabfall
Procédé et four pour la fusion de résidus de cendres

(30) Priority: 28.11.1989 NL 8902935
(43) Date of publication of application: 05.06.1991
(73) Proprietor: Nevels, Leonardus Mathijs Marie, NL-6097 EK Heel (NL)
(72) Inventor: Nevels, Leonardus Mathijs Marie, NL-6097 EK Heel (NL)
(74) Representative: Lips, Hendrik Jan George, Ir.

(56) References cited:
- EP-A- 0 293 545
- DE-C- 546 170
- US-A- 1 994 959
- US-A- 2 078 794
- US-A- 2 078 795
- US-A- 2 539 694

## Description

The invention relates to a method for processing ash residues and other solid combustion products, derived from combustion of waste materials in furnaces as well as to a glass-melting furnace to be used therefore.

Waste disposal is one of the most serious problems these days. In order to be able to cope with the continuously increasing quantities of waste materials, waste is disposed off more and more by means of combustion. In practice solid and fluid waste materials are predominantly combusted in furnaces with a sliding grid or furnaces with a rotating drum, wherein waste materials are combusted continuously. During such a combustion large quantities of ash and slag are formed, which in turn create a problem themselves. In particular for some specific waste material, such as material derived from the photographic and photochemical industries, the ash residues contain substantial amounts of heavy metals, which may cause serious pollution of the soil. In the earlier, not pre-published Dutch patent application No. 89 02749, originating from applicant, a method and an installation are described for combusting waste materials of various sources in a specific pyrolysis furnace, wherein initially the waste is pyrolysed and subsequently combusted and glown. When waste material, is pyrolysed and combusted according to that method, which is especially suitable for processing materials with a high content of heavy metals such as photographic waste material, this indeed results in substantially less ash residues rich in heavy metals. However, even then the problem will still remain, how to dispose off these ash residues. It has been proposed already to immobilise the detrimental metals in these ash residues by compacting and sintering the ash, but also the sinter material obtained will still be a pollutant to the environment by release of heavy metals.

It is now the object of the present invention to provide a method for processing such ash residues, whereby the heavy metals present are recovered as much as possible, and for the rest are immobilized, obtaining a material suitable among others as a raw material for concrete, road-building, enamel, spraying grit and the like.

To that purpose the invention provides a method for processing ash residues and other solid combustion products, derived from combustion of waste materials in furnaces, wherein the ash and other combustion products are gradually supplied in a continuous manner to the upstream end of a glass-melting furnace having a bottom sloping downwards in the flow direction of the melt and being heated from its downstream end, and are fused and vitrified in a continuously proceeding process at high temperatures.

Efficiently the heating in the furnace occurs by means of a blown flame, conveniently allowing for adequately high temperatures, so that fusing and vitrifying may occur.

In order to cause the ash mixture to comprise sufficient silicates for glass formation, the ash may be mixed in addition with siliceous types of soil, for which efficiently polluted types of soil may be used, since the metals, present therein, will be immobilised as well. In addition the advantage is achieved herewith, that two types of waste, that is the combustion ashes of furnaces and the polluted soil, are both processed.

It is of importance in such a vitrification process, that the viscosity of the melt in the furnace remains sufficiently low to warrant a regular flow of fluid melt in the sloping furnace and also to cause a homogeneity of the melt. To that end the viscosity of the melt in the furnace may be adjusted, if required, by adding supplements to the ash supplied, which have a viscosity decreasing action. These supplements may consist of one or more of glass waste, sodium, potassium and/or calcium nitrate (Chile saltpetre), borax, sulfates, silicon compounds, fluorides (feldspar), iron and iron compounds respectively. The total content of supplements should be less than 20 % by weight, in order to make the melt not too thin and aggressive, which might cause problems for the walls of the furnace, and will amount preferably to at most 5 % by weight. During this vitrification process metals will fuse, which sink to the bottom of the furnace and flow down towards the lower side thereof. Molten metal alloy may be drawn off periodically at a draw-off point, located there. Thereby the molten metal alloy is efficiently poured directly into electrolysis anodes, to be subjected subsequently to an electrolytic purification process, whereby metals are purified and separated. These metals are then completely suitable again for re-use.

A thin, very liquid layer of metal sulfide is formed on top of the metal melt during the process, in turn covered by a fluid glass slag, which may be drawn off at a suitable drawn-off point, and will form slag material after cooling and solidifying, physically and chemically belonging to the glasses, and which may be considered as a synthetic obsidian. Obsidian is a vulcanic type of glass, released during vulcanic eruptions, that is used by Indians as material for arrow-heads and tools. This material is hard, and the heavy metals are completely immobilised therein. The material may be used for all kinds of purposes. Amongst others objects may be manufactured thereof, for example ashtrays, saucers and ornamental articles; in comminuted form it is in particular suitable as raw material for concrete, road-building, enamel, spraying grit, etc.

The gases released by the fusing process described above may be purified by gas washing. Efficiently the gas washing may occur by spraying waste liquids of fixing baths and the like, for example as described in the not pre-published Dutch patent application 89 02490, originating from applicant, into the hot gas.

The invention further provides in a glass-melting furnaces to be used with the above process. A glass-melting furnace, useful in the method according to the invention has a tub-like body of refractory material, with at the upstream end relative to the flow stream of the melt a gas discharge duct, and closed by a roof of separate, refractory elements, which body of the furnace has a bottom sloping downwards in the flow direction of the melt and concavely arched in the transverse direction, a downstream end wall, provided with a fuel/air inlet forming a burner, and a draw-off aperture for fluid metals, made in the centre at the lower end, adjacent to the bottom of the furnace, two upright sidewalls, in one of which a draw-off aperture for fused glass slag is made at the upper side, and an upstream wall, provided at the upper side with said gas discharge duct, and means for supplying the ash mixture to be vitrified through the roof at the upstream end of the furnace.

The slope of the bottom of the furnace and the concave profile thereof will cause the melt to flow inwards and downwards, whereby super-imposed layers will be formed of a fluid metal alloy, a thin-flowing metal sulfide layer and glass melt, so that by efficient locating of the various draw-off apertures the metal alloy and the molten glass may be drawn-off periodically in a simple manner and fully separate.

In view of a proper heat control in the furnace it is preferred that the roof is concavely arched, so that heat radiation will be reflected back and will contribute to the temperature of the fuse. By using as supply means a conveyor system, emerging over a hopper in the roof of the furnace, a continuous functioning of the furnace can be provided in a simple manner.

Tub-like gas-melting furnaces are well known in the art. German patent 546 170 discloses a tub-like glass-melting furnace of which the bottom inclines downwards to the rearside end wall. At the rearside there is a supply port for material to be melted for making glass. Burners are located in the side walls of the furnace and there are two glass outlet apertures on the opposite end walls of the furnace. Molten glass is divided in an upper stream flowing to said opposite end walls and a lower stream in countercurrent therewith and flowing in the direction of bottom inclination. Both glass streams are withdrawn separately at the opposite withdraw outlets.

From US patent 2 539 694 a glass melter is known in which the final oven chamber (4) has a concave roof and an inclined bottom as in the present invention. A burner is mounted in the roof, and at the lower side of the inclined bottom in the end wall there is provided a discharge opening for molten material. In none of the above prior art documents provisions are disclosed for separating different materials at different locations.

The invention will now be elucidated in detail with reference to the drawings. In the drawings:
Fig. 1 shows diagrammatically in horizontal cross-section an embodiment of a glass-melting furnace system according to the invention,
Fig. 2 shows a vertical cross-section according to II-II in fig. 1, and
Fig. 3 shows a vertical cross-section according to III-III in Fig. 1.

In the drawings the same reference numbers are used throughout.

In the drawings an embodiment is shown of a glass-melting furnace system according to the invention. The actual furnace generally indicated with 1, has thereby the shape of a relatively flat tub with side walls 2, 3, a downstream end wall 4, an upstream wall 5 (relative to the flow of molten material in the furnace), which is provided with a gas discharge duct 6 at the upper side, and a bottom 7, all consisting of refractory material, resistant to high temperatures required for vitrification.

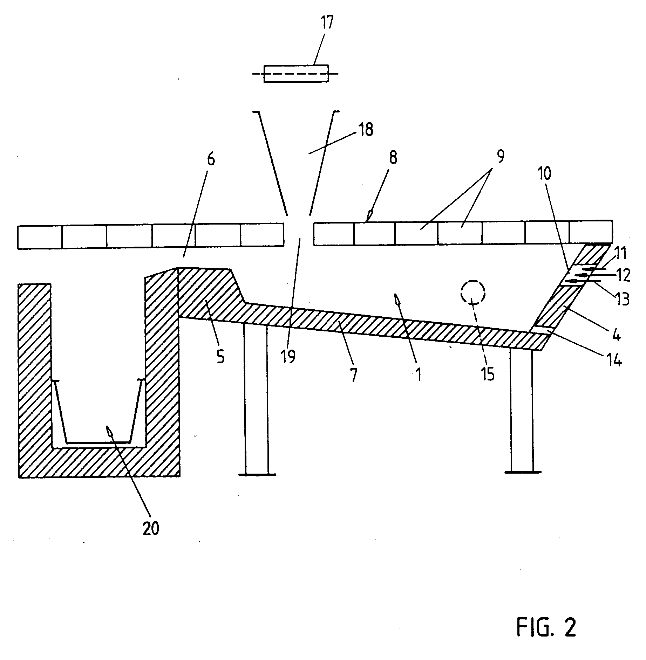

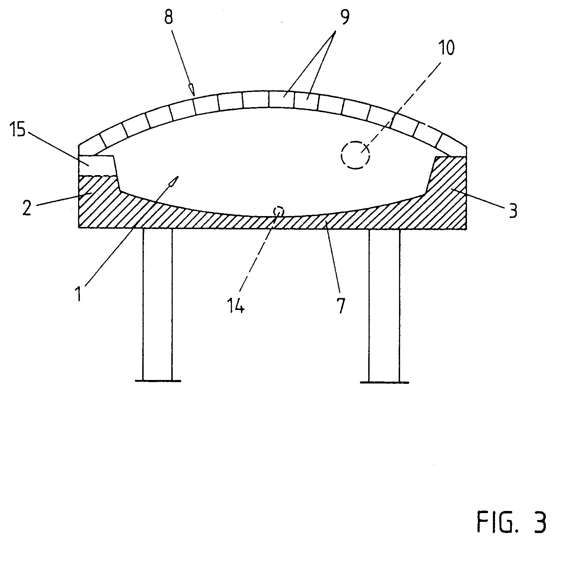

As can be seen in Fig. 2, the bottom 7 is sloping downwards in the flow direction and has a concave (Fig. 3) profile. This provides the advantage that the melt may flow towards the centre and forwards.

The tub-like furnace 1 is closed at the upper side by a roof 8, consisting of separate, refractory bricks 9. This lid has a concave shape (Fig. 3), whereby an advantageous reflection of oven heat back into the oven is achieved.

In the downstream wall 4 is a burner aperture 10 to which lead two fuel ducts 11 and 12 and an air duct 13. By means of this burner 10 a hot blown flame is directed into the furnace. In order to achieve an efficient and as effectively as possible heating, the burner aperture 10 is positioned aside from the centre, horizontally oblique, so that an advantageously large surface area of the furnace can be covered.

In the downstream wall 4 there is in addition an aperture 14 in the centre at the lower end and adjacent to the bottom 7, which serves for drawing-off of fused metal alloy.

In the side wall 2 is in addition at a higher level also a draw-off aperture 15, intended to draw-off fluid glass slag.

The ash residues to be combusted are supplied via conveyor belts 16 and 17, which are shown only schematically. These conveyor belts convey the waste ash very slowly, and conveyor belt 17 emerges over a hopper 18, which empties via an opening 19 in the roof 8 adjacent to the higher rear (upstream) side of the furnace.

Behind the upstream wall 5, showing a beveled interior surface, is a slag collector 20, intended to collect larger particles and unvitrified slag.

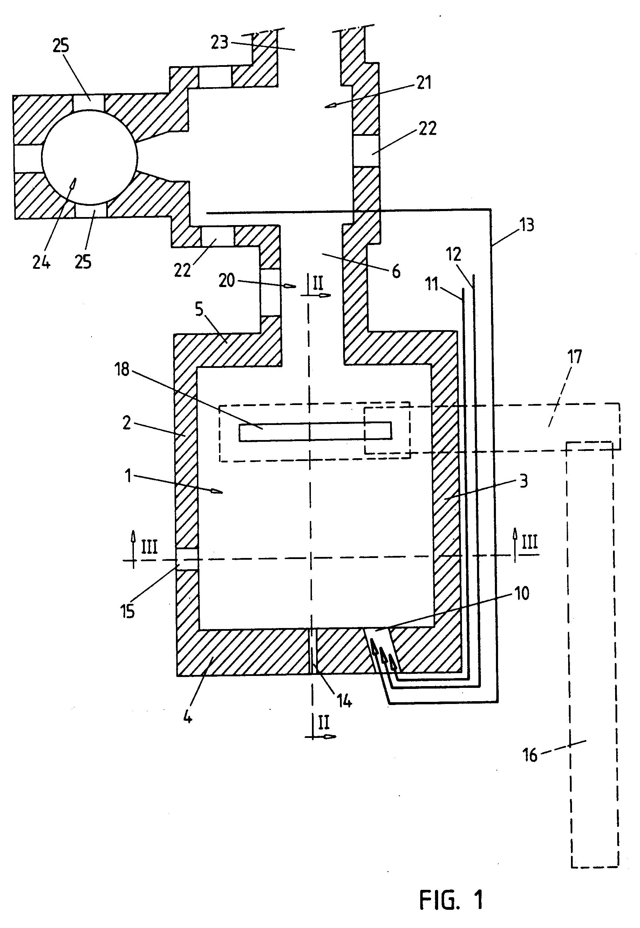

Therebehind is a dust collecting chamber 21, in connection with the gas discharge duct 6, intended for dust removal from the discharged gas. This dust collecting chamber acts in addition as air heater for the air, which is supplied to the burner 10 via the duct 13. The dust collecting chamber has entrance ports 22, in order to be able to clean or to repair the interior. In Fig. 1 is shown in addition a connection 23 for a second glass-melting furnace (not shown). In this manner two glass-furnaces may be combined.

Finally the dust collecting chamber 21 is in connection with a chimney 24, provided with customary entrance ports 25 for cleaning purposes.

During operation ash residues, originating from waste combustion and, if necessary, comminuted, are slowly supplied via conveyor belt system 16, 17 and brought in the furnace via the hopper 18. In the meantime a strong blown flame is burning from the burner aperture 10, fed by the two fuel ducts 11 and 12 and the hot air duct 13. As fuel may be used possibly waste fuels, such as methanol residues from the industry. By the favourable shape of the furnace an intensive heating by the blown flame occurs, whereby the entering ash material will gradually fuse and vitrify, while furthermore metals present will be fused out for a substantial part. The molten fluid in the furnace will gradually flow to the lower located front (downstream) wall 4, whereby during heating with the blown flame in addition metals will be fused out of the ash. These will collect as heavy liquid at the lower side, with on top thereof a layer of metal sulfide, with thereabove a glass fluid, resembling lava. It is of importance that the viscosity of the melt will not be too high, and therefore the melt in continuously monitored and if a too high viscosity is temporary observed, supplement material, that will lower the viscosity, will be added to the ash mixture to be supplied. Further, before firing the furnace, layer of sand or polluted type of soil is spread over the bottom of it in order to assure that initially sufficient silicates will be present to enhance the formation of glass. During this process the draw-off apertures 14 and 15 for molten metal and glass slag are closed and these may be opened periodically to draw-off molten metal and molten glass slag.

In addition to the glass slag another slag is formed to a larger or lesser extent, which is not fluid but will sink into the melt of glass slag and will float at the lower side thereof. This slag may be removed periodically, which can be done in a simple manner by removing some elements 9 of the roof and to push the slag with a type of shovel or brush towards the rear side and over the rear wall into the slag collector.

During the glazing process unavoidably much gas is developed, which is discharged via gas discharge duct 6 through the dust collecting chamber 21 and finally the chimney 24. This gas is subsequently passed to a gas washing installation for further purification.

From the products obtained the drawn-off metal and the drawn-off glass, which is a synthetic obsedian, useful products may be manufactured again. The metal may be purified and separated electrolytically; the obsidian may be used for the manufacture of numerous objects, or may be processed in comminuted form into concrete, building materials for road-building, and the like. The metal present in this obsidian is completely bonded and immobilised and does form no danger any more for the environment.

By combining the method described hereinabove with the methods described in the earlier mentioned Dutch patent applications Nos. 89 02749 and 89 02490, a "niloption" process is approached for processing waste from the photographic industry, whereby efficiently waste materials will act against each other and at the end of the process substantially no detrimental residues are present any more. Such a method comprises the following steps:
A) Combustible waste materials are processed together with uncombustible substancess, sludges, etc. in a pyrolysis combustion process according to Dutch patent application No. 89 02749.
B) Fluid waste materials are preprocessed and stripped of solvents, oils and heavy metals. The muds thus formed are further processed in pyrolysis combustion furnaces. The remaining residual liquids and possibly other residual liquids are used in composing a series of washing liquids, which are used to purify flue gases, formed during the pyrolysis combustion process. Hereby the substances present in the washing liquids proper are decomposed. This method is described in the Dutch patent application No. 89 02490.
C) The ash, formed by various batches, is mixed with supplements, such as glass waste, Chile saltpetre, borax, etc. in order to obtain a mixture, that on fusion will provide a homogeneous slag with low viscosity. Subsequently this mixture is subjected to a vitrification treatment as described in the preceding. The products thus obtained, metal and obsidian, are fully suitable for re-use.

Thus a total system is obtained, wherein many waste materials may be processed acting against each other for obtaining specific cleaning or purification effects, while the finally remaining products are fully harmless to the environment and suitable for re-use.

## Claims

1. A method for processing ash residues and other solid combustion products, derived from combustion of waste materials in furnaces, wherein the ash and other combustion products are gradually supplied in a continuous manner to the upstream end of a glass melting furnace (1) having a bottom (7) sloping downwards in the flow direction of the melt and being heated from its downstream end, and are fused and vitrified in a continuously proceeding process at high temperatures.

2. A method according to claim 1,
characterized in
that the ash is heated with a blown flame.

3. A method according to claim 1 or 2,
characterized in
that the ash is mixed with polluted types of soil.

4. A method according to one of the preceding claims,
characterized in
that the viscosity of the melt in the furnace is adjusted by adding supplements to the supplied ash.

5. A method according to claim 4,
characterized in
that the supplements consist of one or more of glass waste, sodium, potassium and/or calcium nitrate, borax, sulfates, silicon compounds, fluorides, iron and iron compounds respectively.

6. A method according to claim 4,
characterized in
that the content of supplements is less than 20 % by weight.

7. A method according to claim 4,
characterized in
that on average at most 5 % by weight of supplements are added.

8. A method according to any of claims 5 - 7,
characterized in
that as supplement borax is added.

9. A method according to any of claims 1 - 8,
characterized in
that fused metal alloy is drawn off periodically at a drawn-off point (14) at the bottom of the downstream end of the furnace and fused glass slag is drawn off at a higher located drawn-off point (15).

10. A method according to claim 9,
characterized in
that the fused metal alloy is poured directly into electrolysis anodes, and is subsequently subjected to an electrolytic purification process for purification and separation of metals.

11. A method according to claim 9 or 10,
characterized in
that the drawn-off glass slag is comminuted to a raw material for concrete, enamel, spraying grid, road-building, etc.

12. A method according to one of the preceding claims,
characterized in
that the gases of the fusion process are cleaned by gas washing.

13. A method according to claim 12,
characterized in
that the gas washing occurs by spraying waste liquids of fixing baths and the like into the hot gas.

14. A glass-melting furnace, useful in the method according to any of claims 1 - 13, having a tub-like body of refractory material, with at the upstream end relative to the flow stream of the melt a gas discharge duct (6), and closed by a roof (8) of separate, refractory elements (9), which body of the furnace has a bottom (7) sloping downwards in the flow direction of the melt and concavely arched in the transverse direction, a downstream end wall (4), provided with a fuel/air inlet (11,12,13) forming a burner, and a draw-off aperture (14) for fluid metals, made in the centre at the lower end, adjacent to the bottom (7) of the furnace (1), two upright sidewalls (2,3), in one of which a draw-off aperture (15) for fused glass slag is made at the upper side, and an upstream wall (5), provided at the upper side with said gas discharge duct (6), and means (16,17) for supplying the ash mixture to be vitrified through the roof (8) at the upstream end of the furnace.

15. A glass-melting furnace according to claim 14,
characterized in
that the roof (8) is concavely arched.

16. A glass-melting furnace according to claim 14 or 15,
characterized in
that the burner aperture (10) in the downstream end wall (4) is positioned aside from the centre, directed horizontally oblique into the furnace.

17. A glass-melting furnace according to one of claims 14 - 16,
characterized in
that the means for supplying the ash mixture to be vitrified consist of a conveyor belt system (16,17), emerging over a hopper (18) in the roof (8) of the furnace.

18. A glass-melting furnace, according to one of claims 14 - 17,
characterized in
that a slag collector (20) is located behind the furnace in connection with the upstream wall (5).

19. A glass-melting furnace according to one of claims 14 - 18,
characterized in
that the gas discharge duct (6) of the furnace is connected with a chimney (24) via a dust collecting chamber (21), which also provides preheated air for the burner.

## Patentansprüche

1. Verfahren zum Verarbeiten von Ascherückständen und anderen festen Verbrennungsprodukten, erhalten durch eine Verbrennung von Abfallmaterialien in Feuerungsanlagen, wobei die Asche und andere Verbrennungsprodukte graduell auf eine kontinuierliche Art dem stromauf liegenden Ende einer Glasschmelz-Feuerungsanlage (1) zugeführt werden, die einen Boden (7) aufweist, der nach unten in Flußrichtung der Schmelze geneigt ist und ausgehend von seinem stromab liegenden Ende beheizt wird, und in einem kontinuierlich fortschreitenden Prozeß bei hohen Temperaturen eingeschmolzen und verglast werden.

2. Verfahren nach Anspruch 1,
dadurch gekennzeichnet,
daß die Asche mit einer geblasenen Flamme erhitzt wird.

3. Verfahren nach Anspruch 1 oder 2,
dadurch gekennzeichnet,
daß die Asche mit verunreinigte Böden vermischt wird.

4. Verfahren nach einem der vorangehenden Ansprüche,
dadurch gekennzeichnet,
daß die Viskosität der Schmelze in der Feuerungsanlage durch das Zuführen von Zusätzen zu der zugeführten Asche eingestellt wird.

5. Verfahren nach Anspruch 4,
dadurch gekennzeichnet,
daß die Zusätze aus einem oder mehreren der Bestandteile Glasabfall, Natrium, Kalium und/oder Calciumnitrat, Borax, Sulfaten, Siliciumverbindungen, Fluoriden, Eisen und Eisenverbindungen bestehen.

6. Verfahren nach Anspruch 4,
dadurch gekennzeichnet,
daß die Menge der Zusätze geringer als 20 Gew.-% beträgt.

7. Verfahren nach Anspruch 4,
dadurch gekennzeichnet,
daß im Durchschnitt maximal 5 Gew.-% an Zusätzen zugefügt wird.

8. Verfahren nach einem der Ansprüche 5 - 7,
dadurch gekennzeichnet,
daß als Zusatz Borax zugeführt wird.

9. Verfahren nach einem der Ansprüche 1 - 8,
dadurch gekennzeichnet,
daß die eingeschmolzene Metallegierung periodisch an einem Abführpunkt (14) am Boden des stromab liegenden Endes der Feuerungsanlage abgezogen wird und eingeschmolzene Glasschlacke an einem höher angeordneten Abführpunkt (15) abgeführt wird.

10. Verfahren nach Anspruch 9,
dadurch gekennzeichnet,
daß die eingeschmolzene Metallegierung direkt in Elektrolyseanoden geführt wird und anschließend einem elektrolytischen Reinigungsprozeß zum Reinigen und Trennen von Metallen ausgesetzt wird.

11. Verfahren nach Anspruch 9 oder 10,
dadurch gekennzeichnet,
daß die abgeführte Glasschlacke zu einem Rohmaterial zerkleinert wird, für Beton, Emaille, Sprühgitter, Straßenbau, usw.

12. Verfahren nach einem der vorangehenden Ansprüche,
dadurch gekennzeichnet,
daß die Gase des Schmelzprozesses durch Gaswäsche gereinigt werden.

13. Verfahren nach Anspruch 12,
dadurch gekennzeichnet,
daß die Gaswäsche durch das Sprühen von Abfallflüssigkeiten von Fixierbädern und ähnlichem in das heiße Gas erfolgt.

14. Glasschmelz-Feuerungsanlage, sinnvoll einzusetzen in dem Verfahren nach einem der Ansprüche 1 - 13, mit einem wannenartigen Körper aus feuerbeständigem Material, wobei am stromauf liegenden Ende relativ zum Schmelzstrom eine Gasausströmleitung (6) vorgesehen ist, verschlossen durch eine Abdeckung (8) aus einzelnen feuerbeständigen Elementen (9), wobei der Körper der Feuerungsanlage einen Boden (7) aufweist, der nach unten in Strömungsrichtung der Schmelze geneigt und in Querrichtung konkav gekrümmt ist, einer stromab liegenden Abschlußwand (4), die mit einem einen Brenner bildenden Brennstoff/Luft-Einlaß (11, 12, 13) und einer Abführöffnung (14) für flüssige Metalle versehen ist, gebildet mittig am unteren Ende, nahe dem Boden (7) der Feuerungsanlage (1), zwei aufrechten Seitenwänden (2, 3), wobei in einer eine Abführöffnung (15) für eingeschmolzene Glasschlacke an der oberen Seite gebildet ist und eine stromauf liegenden Wand (5) an der oberen Seite mit der Gasausströmleitung (6) versehen ist, und Mitteln (16, 17) zum Zuführen des Aschengemisches, welches durch die Abdeckung (8) am stromauf liegenden Ende der Feuerungsanlage verglast werden soll.

15. Glasschmelz-Feuerungsanlage nach Anspruch 14,
dadurch gekennzeichnet,
daß die Abdeckung (8) konkav gekrümmt ist.

16. Glasschmelz-Feuerungsanlage nach Anspruch 14 oder 15,
dadurch gekennzeichnet,
daß die Brenneröffnung (10) in der stromab liegenden Abschlußwand (4) außermittig angeordnet und schräg horizontal in die Feuerungsanlage gerichtet ist.

17. Glasschmelz-Feuerungsanlage nach einem der Ansprüche 14 - 16,
dadurch gekennzeichnet,
daß die Mittel zur Zufuhr des zu verglasenden Aschengemisches aus einem Förderbandsystem (16, 17) bestehen, das über einen Trichter (18) in die Abdeckung (8) der Feuerungsanlage führt.

18. Glasschmelz-Feuerungsanlage nach einem der Ansprüche 14 - 17,
dadurch gekennzeichnet,
daß ein Schlackenkollektor (20) hinter der Feuerungsanlage in Verbindung mit der stromauf liegenden Wand (5) angeordnet ist.

19. Glasschmelz-Feuerungsanlage nach einem der Ansprüche 14 - 18,
dadurch gekennzeichnet,
daß die Gasausströmleitung (6) der Feuerungsanlage mit einem Kamin (24) über eine Staubsammelkammer (21) verbunden ist, die auch vorgewärmte Luft für den Brenner stellt.

## Revendications

1. Procédé pour traiter des résidus de cendres et d'autres produits de combustion solides, dérivés de la combustion de déchets dans des fours, dans lequel les cendres et autres produits de combustion sont amenés progressivement en continu à l'extrémité amont d'un four de verrerie (1), dont le fond (7) est incliné vers le bas dans la direction de l'écoulement du bain de fusion et qui est chauffé depuis son extrémité aval, et sont fondus et vitrifiés dans un procédé continu à température élevée.

2. Procédé selon la revendication 1, caractérisé en ce que les cendres sont chauffées par une flamme soufflée.

3. Procédé selon la revendication 1 ou la revendication 2, caractérisé en ce que les cendres sont mélangées avec des types de sol pollués.

4. Procédé selon l'une des revendications précédentes, caractérisé en ce que la viscosité du bain de fusion dans le four est ajustée en ajoutant des suppléments aux cendres amenées.

5. Procédé selon la revendication 4, caractérisé en ce que les suppléments comprennent un ou plusieurs des produits respectifs suivants : déchets de verre, nitrate de sodium, potassium et/ou calcium, borax, sulfates, composés de silicium, fluorures, fer et composés de fer.

6. Procédé selon la revendication 4, caractérisé en ce que la quantité de ces suppléments est inférieure à 20% en poids.

7. Procédé selon la revendication 4, caractérisé en ce qu'on ajoute en moyenne au plus 5% en poids de ces suppléments.

8. Procédé selon l'une des revendications 5 à 7, caractérisé en ce qu'on ajoute du borax comme supplément.

9. Procédé selon l'une des revendications précédentes, caractérisé en ce qu'on retire périodiquement un alliage métallique fondu en un point de soutirage (14) situé au fond de l'extrémité aval du four et qu'on retire des scories vitreuses fondues en un point d'enlèvement (15) situé à un niveau plus élevé.

10. Procédé selon la revendication 9, caractérisé en ce que l'alliage métallique fondu est versé directement dans des anodes d'électrolyse et est ensuite soumis à un procédé de purification électrolytique pour purifier et séparer les métaux.

11. Procédé selon la revendication 9 ou la revendication 10, caractérisé en ce que les scories vitreuses retirées sont broyées finement pour constituer une matière première pour le béton, l'émail, un sable de pulvérisation, la construction de routes, etc.

12. Procédé selon l'une des revendications précédentes, caractérisé en ce que les gaz du processus de fusion sont épurés par lavage.

13. Procédé selon la revendication 12, caractérisé en ce que les gaz sont lavés en pulvérisant des liquides usés de bains de fixage ou l'analogue dans les gaz chauds.

14. Four de verrerie, utilisé dans le procédé selon l'une des revendications 1 à 13, ayant un corps de matériau réfractaire en forme de cuve, avec un conduit d'évacuation des gaz (6) au niveau de l'extrémité amont par rapport au courant du bain de fusion, et formé par une voûte (8) en éléments réfractaires séparés (9), lequel corps du four a un fond (7) incliné vers le bas dans la direction de l'écoutement du bain de fusion et incurvé de façon concave dans la direction transversale, une paroi terminale aval (4) comportant une arrivée de combustible et d'air (11,12,13) formant un brûleur et une ouverture de soutirage (14) pour les métaux liquides, prévue dans le centre au niveau de l'extrémité inférieure et adjacente au fond (7) du four, deux parois latérales verticales (2,3), dans l'une desquelles est prévue, du côté supérieur, une ouverture d'enlèvement (15) des scories vitreuses fondues, et une paroi amont (5), comportant, du côté supérieur, un conduit d'évacuation des gaz (6), et des moyens (16,17) pour amener le mélange de cendres à vitrifier à travers la voûte (8) au niveau de l'extrémité amont du four.

15. Four de verrerie selon la revendication 14, caractérisé en ce que la voûte (8) est incurvée de façon concave.

16. Four de verrerie selon l'une des revendications 14 ou 15, caractérisé en ce que l'ouverture de brûleur (10) dans la paroi terminale aval (4) est décalée sur le côté par rapport au centre et est dirigée horizontalement en oblique dans le four.

17. Four de verrerie selon l'une des revendications 14 à 16, caractérisé en ce que les moyens pour amener le mélange de cendres à vitrifier consistent en un système de bande transporteuse (16,17) sortant sur une trémie (18) dans la voûte (8) du four.

18. Four de verrerie selon l'une des revendications 14 à 17, caractérisé en ce qu'un collecteur de scories (20) est situé derrière le four en liaison avec la paroi amont (5).

19. Four de verrerie selon l'une des revendications 14 à 18, caractérisé en ce que le conduit d'évacuation des gaz (6) du four est raccordé à une cheminée (24) par l'intermédiaire d'une chambre collectrice de poussières (21), qui procure aussi de l'air préchauffé au brûleur.
